# FASCICULE DE BREVET EUROPEEN

(11) **EP 4 238 244 B1**
(45) Date de publication et mention de la délivrance du brevet: **03.12.2025**
(21) Numéro de dépôt: 21815562.0
(22) Date de dépôt: 29.10.2021
(51) Int. Cl.: H04B 10/116, H04B 10/114

(54) **DISPOSITIF OPTOÉLECTRONIQUE DISCRET POUR UN POINT D'ACCÈS OU TERMINAL D'UN RÉSEAU OPTIQUE NON FILAIRE**
DISKRETE OPTOELEKTRONISCHE VORRICHTUNG FÜR EINEN ZUGANGSPUNKT ODER EIN ENDGERÄT EINES DRAHTLOSEN OPTISCHEN NETZWERKS
DISCRETE OPTOELECTRONIC DEVICE FOR AN ACCESS POINT OR TERMINAL OF A WIRELESS OPTICAL NETWORK

(30) Priorité: 30.10.2020 FR 2011149
(43) Date de publication de la demande: 06.09.2023
(73) Titulaire: Oledcomm, 78140 Velizy Villacoublay (FR)
(72) Inventeur: DOMINGUEZ-GONZALEZ, Carlos Usiel, 92310 Sèvres (FR); BECHADERGUE, Bastien, 92240 Malakoff (FR); LARTIGUE, Clément, 92140 Clamart (FR)
(74) Mandataire: Bonnet, Michel
(86) Numéro de dépôt international: PCT/FR2021/051907
(87) Numéro de publication internationale: WO 2022/090672

(56) Documents cités:
- US-A1- 2013 236 183
- US-B1- 6 466 041
- US-B1- 6 483 622
- FAHS BASSEM ET AL: "A 12-m 2.5-Gb/s Lighting Compatible Integrated Receiver for OOK Visible Light Communication Links", JOURNAL OF LIGHTWAVE TECHNOLOGY, IEEE, USA, vol. 34, no. 16, 15 August 2016 (2016-08-15), pages 3768 - 3775, XP011618689, ISSN: 0733-8724, [retrieved on 20160805], DOI: 10.1109/JLT.2016.2587598

## Description

La présente invention concerne un dispositif optoélectronique destiné à équiper un point d'accès ou un point terminal (ou « end point ») d'un système de communication optique sans fil d'un réseau optique non filaire.

Certains réseaux optiques non filaires, éventuellement de type LiFi (« Light Fidelity »), comprennent au moins un système de communication optique sans fil (ou OWC (« Optical Wireless Communication »)) permettant à des équipements de communication (comme par exemple des téléphones mobiles (éventuellement intelligents (ou « smartphones »)) ou des tablettes électroniques) ou des ordinateurs, couplés à des équipements d'interface OWC, de communiquer au moyen de signaux lumineux. A cet effet, un système de communication optique sans fil (ou système OWC) comprend au moins deux points ayant respectivement des zones de couverture se recouvrant généralement partiellement et couplés à un routeur (ou commutateur (ou encore « switch »)), éventuellement de type PoE (« Power over Internet » - alimentation électrique par câble Ethernet). Ce routeur est couplé à un contrôleur de réseau qui est lui-même couplé à au moins un réseau d'accès, faisant éventuellement partie du réseau OWC et éventuellement non filaire (par exemple de type WAN (« Wireless Access Network » - réseau d'accès non filaire), afin de pouvoir échanger des signaux électriques (porteurs d'informations (ou données)),

Dans ce type de réseau OWC un point d'accès communique (émet/reçoit), au moyen de signaux lumineux modulés en intensité, avec un équipement d'interface couplé à un équipement de communication présent dans sa zone de couverture. Chaque point d'accès est donc notamment chargé de convertir un signal de données numériques (modulé) fourni par un modem en un signal lumineux (ou optique) de communication optique sans fil, et inversement de convertir un signal lumineux reçu d'un équipement d'interface OWC (couplé à un équipement de communication) en un signal de données numériques destiné au modem.

Afin d'assurer ses fonctions chaque point d'accès (ou terminal) comprend généralement :
- un module de conversion analogique/numérique (ADC) associé à une première source d'alimentation en courant, piloté par un premier module de pilotage, et chargé de convertir un signal non binaire (ou analogique) destiné au modem en un signal numérique (ou binaire),
- un module de conversion numérique/analogique (DAC) chargé de convertir un signal numérique reçu du modem en un signal non binaire (ou analogique),
- un module optoélectronique d'émission comprenant une deuxième source d'alimentation en courant, piloté par un deuxième module de pilotage, et chargé de convertir un signal analogique en un signal lumineux à transmettre, et
- un module optoélectronique de réception comprenant une troisième source d'alimentation en tension et chargé de convertir un signal lumineux reçu d'un équipement d'interface en un signal numérique destiné au modem.

On notera que l'ensemble constitué du module de conversion analogique/numérique (ADC) et du module de conversion numérique/analogique (DAC), de la première source d'alimentation en courant, du premier module de pilotage, du module de conversion de signaux électrique en signaux lumineux et du module de conversion de signaux lumineux en signaux électriques est souvent appelé dispositif AFE (« Analog Front-End »).

On notera également que lorsque le signal analogique fourni par le modem est binaire le module de conversion numérique/analogique peut ne pas être utilisé. C'est notamment le cas lorsque la modulation assurée par le modem est une modulation pulsée de type « on-off keying (ou OOK - tout ou rien) » ou de type « pulse position modulation (ou PPM - modulation par position d'impulsion) ».

Les points d'accès présentés ci-avant sont notamment décrits dans l'article de Bassem Fahs et al "A 12-m 2.5-Gbs Lighting Compatible Integrated Rec » (Journal of Lightwave Technology, Vol. 34, N°16, August 15, 2016) et le descriptif commercial de EASii IC France « KEREN : Analog Front end For High End LIFI Base Band Application » (juin 2020). Un autre document de l'état de l'art, US 2013/236183 A1, divulgue un module de pilotage commun en émission et réception d'un point d'accès optique non-filaire.

Un inconvénient principal des points d'accès décrits ci-dessus réside dans le fait qu'ils sont constitués à partir de modules électroniques du commerce qui n'ont, a priori, pas été initialement conçus pour fonctionner ensemble dans une application OWC. Il en résulte des performances non optimales, une surconsommation d'énergie, un encombrement important, et un surcoût.

Par ailleurs, les systèmes de communication optique sans fil (ou OWC) étant conçus au cas par cas, une fois constitués ils ne sont pas modulables.

Il peut ainsi être souhaité de prévoir un dispositif optoélectronique qui permette de s'affranchir d'au moins une partie des inconvénients précités.

A cet effet, il est notamment proposé un dispositif optoélectronique, d'une part, destiné à faire partie d'un point d'accès ou d'un point terminal d'un système de communication optique sans fil, et, d'autre part, comportant :
- un module optoélectronique d'émission propre à convertir un signal numérique en un signal lumineux à transmettre, et
- un module optoélectronique de réception propre à convertir un signal lumineux reçu en un signal numérique.

Ce dispositif optoélectronique se caractérise par le fait qu'il comprend en outre :
- un module de pilotage pilotant les module optoélectronique d'émission et module optoélectronique de réception, comprenant:
   i) un transformateur assurant une conversion du signal analogique reçu sous une forme différentielle en un premier signal intermédiaire unique, ii) un premier groupe de composants passifs effectuant une pré-égalisation dudit premier signal intermédiaire pour délivrer un deuxième signal intermédiaire, iii) un premier amplificateur amplifiant ledit deuxième signal intermédiaire reçu sur une première entrée pour délivrer un troisième signal intermédiaire sur une sortie, et
   iv) un transistor comportant une grille recevant ledit troisième signal intermédiaire et un drain connecté audit module optoélectronique d'émission , ce dernier étant polarisé par une tension fournie par ledit module d'alimentation et définissant un niveau moyen de courant de polarisation et étant traversé par un courant ayant des fluctuations entre des valeurs minimale et maximale induites par des fluctuations dudit troisième signal intermédiaire, et
- un module d'alimentation alimentant en courant choisi par le module de pilotage le module optoélectronique d'émission, et en tensions choisies par le module de pilotage le module optoélectronique de réception et le module de pilotage.

Ainsi, on dispose d'un dispositif optoélectronique comprenant un unique module d'alimentation commun aux autres modules et un unique module de pilotage commun aux module optoélectronique d'émission et module optoélectronique de réception, et donc ayant des performances optimales et une consommation d'énergie, un encombrement et un coût réduits.

Le dispositif optoélectronique selon l'invention peut comporter d'autres caractéristiques qui peuvent être prises séparément ou en combinaison, et notamment :
- son module de pilotage peut comprendre une boucle de rétroaction comportant un second amplificateur ayant une première entrée couplée à une source du transistor, une seconde entrée, et une sortie couplée à cette seconde entrée via un second groupe de composants passifs et à une seconde entrée du premier amplificateur, de sorte que le courant traversant le module optoélectronique d'émission ait une forme similaire à une forme du deuxième signal intermédiaire ;
- en présence de la sous-option précédente, le second groupe de composants passifs peut comprendre un composant inductif introduisant une augmentation de bande passante à un signal image du courant traversant le module optoélectronique d'émission et/ou un composant capacitif induisant une autre pré-égalisation ;
- en présence de la première option, le module de pilotage peut comprendre un régulateur de tension à faible chute (ou « Low-dropout regulator ») produisant à partir d'un signal de pilotage, ayant des états définissant des instants pendant lesquels le module optoélectronique d'émission doit fonctionner ou ne pas fonctionner, une tension polarisant la première entrée du premier amplificateur. En variante, il peut comprendre un transistor ayant une source recevant un signal de pilotage, ayant des états définissant des instants pendant lesquels le module optoélectronique d'émission doit fonctionner ou ne pas fonctionner, et agissant comme un interrupteur ouvert ou fermé selon l'état qui est défini par le signal de pilotage reçu ;
- son module optoélectronique de réception peut comprendre au moins un photorécepteur délivrant un premier courant représentatif du signal lumineux reçu. Dans ce cas, son module de pilotage peut comprendre un premier amplificateur opérationnel configuré en amplificateur trans-impédance pour convertir le premier courant, reçu sur une première entrée via un troisième groupe de composants actifs et passifs chargé de réduire une valeur de capacité ressentie par sa première entrée, en une tension délivrée sur une sortie grâce à une boucle de contre-réaction couplant cette première entrée à cette sortie. En variante, son module optoélectronique de réception peut comprendre un photorécepteur délivrant un premier courant représentatif du signal lumineux reçu, et son module de pilotage peut comprendre un premier amplificateur opérationnel configuré en amplificateur trans-impédance pour convertir ce premier courant, reçu sur une première entrée via un transistor ayant une grille et appartenant à un quatrième groupe de composants actifs et passifs chargé de réduire une valeur de capacité du photorécepteur ressentie par sa première entrée, en une tension délivrée sur une sortie grâce à une boucle de contre-réaction reliant cette sortie à la grille du transistor ;
- il peut comprendre un module de conversion numérique/analogique propre à convertir un signal numérique reçu en un signal analogique non binaire destiné au module optoélectronique d'émission, et un module de conversion analogique/numérique propre à convertir un signal analogique non binaire fourni par le module optoélectronique de réception en un signal numérique. Dans ce cas, son module d'alimentation alimente en courant son module de conversion numérique/analogique et son module de conversion analogique/numérique ;
- son module optoélectronique d'émission peut comprendre au moins un élément optique assurant une mise en forme choisie du signal lumineux avant transmission et/ou son module optoélectronique de réception peut comprendre au moins un élément optique propre à collecter de façon choisie le signal lumineux avant qu'il ne soit converti en courant ;
- son module optoélectronique d'émission peut comprendre au moins une source lumineuse comportant au moins une diode électroluminescente (ou LED) ou au moins une diode laser ou au moins une diode laser à cavité verticale émettant par la surface (ou « Vertical Cavity Surface-Emitting Laser (ou VCSEL)) » ;
- son module optoélectronique de réception peut comprendre au moins un photorécepteur comportant au moins une photodiode ou au moins une photodiode à avalanche ou au moins une diode à avalanche à photon unique (ou « Single-Photon Avalanche Diode (ou SPAD)) » ;
- il peut comprendre un premier filtre optique associé au module optoélectronique d'émission et chargé de laisser passer des signaux lumineux délivrés par ce dernier et ayant une longueur d'onde choisie, et/ou un second filtre optique associé au module optoélectronique de réception et chargé de laisser passer vers ce dernier des signaux lumineux ayant une longueur d'onde choisie ;
- il peut comprendre un modem propre à convertir chaque signal de données analogiques modulées reçu en signal de données numériques, et à convertir chaque signal de données analogiques modulées en données numériques.

L'invention propose également un point d'accès ou un point terminal destiné à faire partie d'un système de communication optique sans fil et comprenant au moins un dispositif optoélectronique du type de celui présenté ci-avant.

Lorsque le (chaque) dispositif optoélectronique est dépourvu de modem, ce point d'accès ou point terminal peut comprendre au moins un modem propre à convertir des données numériques reçues en un signal de données numériques modulé et destiné au (à un) dispositif optoélectronique, et à convertir un signal de données numériques modulé et issu du (d'un) dispositif optoélectronique en données numériques.

Par exemple, ce point d'accès ou point terminal peut comprendre, d'une part, N dispositifs optoélectroniques associés respectivement à N longueurs d'onde différentes, avec N ≥ 2, et, d'autre part, un routeur couplé aux N dispositifs optoélectroniques et chargé d'alimenter sélectivement ces derniers en fonction d'instructions reçues.

L'invention propose également un système de communication optique sans fil destiné à faire partie d'un réseau optique non filaire et comprenant au moins un point d'accès ou point terminal du type de celui présenté ci-avant.

Par exemple, ce système de communication optique sans fil peut comprenant, d'une part, N points d'accès ou terminaux du type de celui présenté ci-avant (mais sans routeur), associés respectivement à N longueurs d'onde différentes, avec N ≥ 2, et, d'autre part, un routeur couplé à ces N points d'accès ou terminaux.

L'invention sera mieux comprise à l'aide de la description qui va suivre, donnée uniquement à titre d'exemple et faite en se référant aux dessins annexés dans lesquels :
[Fig.1] la figure 1 illustre schématiquement et fonctionnellement un exemple de réalisation d'un réseau optique non filaire,
[Fig.2] la figure 2 illustre schématiquement et fonctionnellement un exemple de réalisation d'un système de communication optique sans fil selon l'invention, destiné à faire partie d'un réseau optique non filaire et comprenant N points d'accès comportant chacun un exemple de réalisation d'un dispositif optoélectronique selon l'invention,
[Fig.3] la figure 3 illustre schématiquement un exemple de réalisation d'une première sous-partie d'un module de pilotage d'un dispositif optoélectronique selon l'invention, dédiée à l'émission,
[Fig.4] la figure 4 illustre schématiquement un exemple de réalisation d'une première variante d'une partie de la première sous-partie du module de pilotage de la figure3,
[Fig.5] la figure 5 illustre schématiquement un exemple de réalisation d'une seconde variante d'une partie de la première sous-partie du module de pilotage de la figure3,
[Fig.6] la figure 6 illustre schématiquement un exemple de réalisation d'une seconde sous-partie d'un module de pilotage d'un dispositif optoélectronique selon l'invention, dédiée à la réception, et
[Fig.7] la figure 7 illustre schématiquement un exemple de réalisation d'une variante de seconde sous-partie d'un module de pilotage d'un dispositif optoélectronique selon l'invention, dédiée à la réception.

L'invention a notamment pour but de proposer un dispositif optoélectronique 1 destiné à faire partie d'un point d'accès ou point terminal APn (n = 1 à N), lui-même destiné à faire partie d'un système de communication optique sans fil 2 d'un réseau optique non filaire 3.

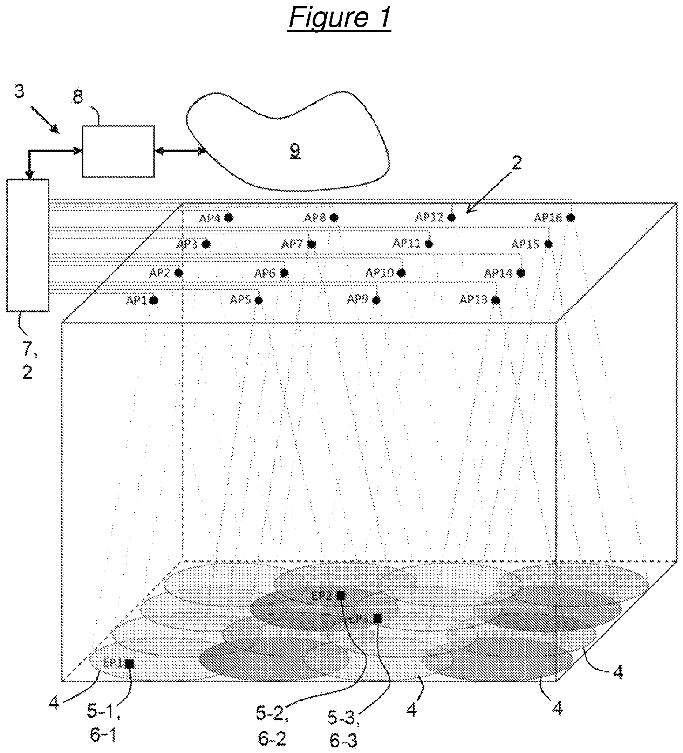

On a schématiquement et fonctionnellement représenté sur la figure 1 un exemple de réseau optique non filaire 3 (ci-après appelé simplement réseau). Ce réseau 3 comprend ici, non limitativement, un système de communication optique sans fil 2 comportant un routeur 7 couplé à seize points d'accès APn (n = 1 à 16) ayant chacun une zone de couverture 4 et agencés chacun pour communiquer avec des équipements d'interface 5-k qui sont couplés respectivement à des équipements de communication 6-k (éventuellement portables ou mobiles). Sur la figure 1, chaque référence EPk (ici k = 1 à 3) désigne un équipement comprenant un équipement de communication 6-k auquel est couplé un équipement d'interface 5-k.

Chaque point d'accès APn fonctionne en émission et en réception. En émission, un point d'accès APn est chargé de transformer des signaux électriques porteurs d'informations (ou données), qu'il a reçus du routeur 7, en signaux lumineux modulés en intensité pour transporter ces mêmes informations (ou données) et qu'il transmet dans sa zone de couverture 4 à destination d'au moins un équipement d'interface 5-k. En réception, un point d'accès APn est chargé de transformer des signaux lumineux, modulés en intensité (pour transporter des informations (ou données)) et qu'il a reçus d'un équipement d'interface 5-k, en signaux électriques porteurs de ces mêmes informations (ou données) et qu'il transmet au routeur 7.

Comme illustré non limitativement sur la figure 1, tous les points d'accès APn peuvent, par exemple, être solidarisés (directement ou indirectement) au plafond (ou sous-plafond) d'au moins une pièce.

Egalement comme illustré non limitativement sur la figure 1, tous les points d'accès APn peuvent être couplés à un même routeur 7 avec lequel ils échangent des signaux électriques (porteurs d'informations (ou données)). Mais cela n'est pas obligatoire car un réseau 3 peut comprendre plusieurs routeurs 7. En fait, un système de communication optique sans fil 2 peut comporter un routeur 7 couplé à N points d'accès APn, avec N ≥ 2, ou bien N points d'accès APn couplés à au moins un routeur de son réseau 3, ou alors un point d'accès APn d'un système de communication optique sans fil 2 peut comprendre N dispositifs optoélectroniques 1 associés respectivement à N longueurs d'onde différentes, avec N ≥ 2, et un routeur couplé aux N dispositifs optoélectroniques 1 et chargé d'alimenter sélectivement ces derniers (1) en fonction d'instructions reçues.

Le routeur 7 peut, par exemple, être de type PoE (« Power over Internet » - alimentation électrique par câble Ethernet). Par ailleurs, ce routeur 7 est couplé à un contrôleur de réseau 8 qui est lui-même couplé à un réseau d'accès 9, éventuellement non filaire (par exemple de type WAN (« Wireless Access Network » - réseau d'accès non filaire). Ainsi, le routeur 7 peut échanger des signaux électriques (porteurs d'informations (ou données)) avec au moins un réseau d'accès 9. Ce réseau d'accès 9 fait éventuellement partie du réseau 3. Mais cela n'est pas obligatoire car il pourrait faire partie d'un réseau externe auquel est couplé le réseau 3.

Comme un point d'accès (ou point terminal) APn, chaque équipement d'interface 5-k fonctionne en émission et en réception. En émission, un équipement d'interface 5-k est chargé de transformer des signaux électriques porteurs d'informations (ou données), qu'il a reçus de l'équipement de communication 6-k auquel il est couplé, en signaux lumineux modulés en intensité pour transporter ces mêmes informations (ou données) et qu'il transmet à destination du point d'accès APn auquel il est temporairement couplé. En réception, un équipement d'interface 5-k est chargé de transformer des signaux lumineux, modulés en intensité (pour transporter des informations (ou données)) et qu'il a reçus d'un point d'accès APn, en signaux électriques porteurs de ces mêmes informations (ou données) et qu'il transmet à l'équipement de communication 6-k auquel il est couplé.

Par exemple un équipement d'interface 5-k peut être un accessoire (ou dongle).

Egalement par exemple, un équipement de communication 6-k peut être un téléphone mobile (éventuellement intelligent (ou smartphone)) ou une tablette électronique ou un ordinateur ou encore une console de jeu communicante.

On notera que dans l'exemple illustré non limitativement sur la figure 1, le système de communication optique sans fil 2 comprend seize points d'accès APn (N = 16), mais il peut comprendre n'importe quel nombre N de points d'accès APn, dès lors que ce nombre N est au moins égal à un.

Dans ce qui suit on considère que le réseau 3 est de type LiFi. Mais l'invention n'est pas limitée à ce type de réseau optique non filaire. Elle concerne en effet tout type de réseau optique non filaire.

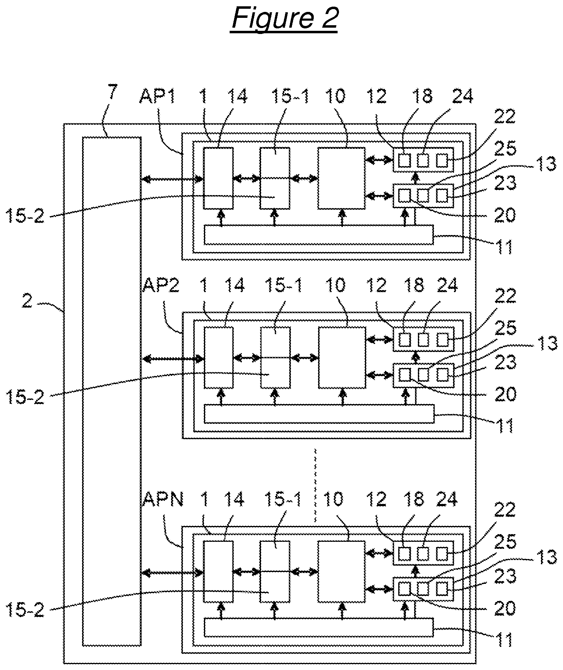

Comme illustré non limitativement sur la figure 2, un dispositif optoélectronique 1, selon l'invention, comprend au moins un module de pilotage 10, un module d'alimentation 11, un module optoélectronique d'émission 12 et un module optoélectronique de réception 13. De préférence, il comprend aussi un modem 14 décrit plus loin.

Le module optoélectronique d'émission 12 est propre à convertir un signal numérique (ou binaire) en un signal lumineux (modulé en intensité) à transmettre en direction d'un équipement d'interface 5-k couplé à un équipement de communication 6-k.

Ce module optoélectronique d'émission 12 comprend au moins une source lumineuse 18 qui peut, par exemple, comprendre au moins une diode électroluminescente (ou LED) ou au moins une diode laser ou encore au moins une diode laser à cavité verticale émettant par la surface (ou « Vertical Cavity Surface-Emitting Laser (ou VCSEL)) ».

Le signal numérique (reçu par le module optoélectronique d'émission 12) résulte d'une modulation de données numériques issues du routeur 7 par un modem 14 (qui fait éventuellement partie du dispositif optoélectronique 1, comme dans l'exemple illustré non limitativement sur la figure 2). Il est donc issu soit directement d'un modem 14, soit d'un module de conversion numérique/analogique (ou DAC) 15-1 faisant partie du dispositif optoélectronique 1 et couplé au modem 14. Cela dépend en effet du type de la modulation qui est effectuée par le modem 14. En effet, si le signal fourni par le modem 14 est binaire (et donc qu'il s'agit d'un signal numérique), comme lorsque la modulation est une modulation pulsée de type « on-off keying (ou OOK - tout ou rien) » ou de type « puise position modulation (ou PPM - modulation par position d'impulsion) », le module de conversion numérique/analogique 15-1 peut ne pas être utilisé. En revanche si le signal fourni par le modem 14 n'est pas binaire (et donc qu'il s'agit d'un signal analogique), comme lorsque la modulation est une modulation de type OFDM (« Orthogonal Frequiency-Division Multiplexing » - codage de signaux numériques par répartition en fréquences orthogonales), le module de conversion numérique/analogique 15-1 doit être utilisé pour convertir le signal numérique reçu en un signal non binaire (ou analogique) destiné au module optoélectronique d'émission 12. Pour le sens inverse on prévoit un module de conversion analogique/numérique (ou ADC) 15-2 (faisant également partie du dispositif optoélectronique 1 et couplé au modem 14) pour convertir un signal non binaire (analogique) fourni par le module optoélectronique de réception 13 en un signal numérique destiné au modem 14.

On considère dans ce qui suit, à titre d'exemple illustratif que le modem 14 effectue une modulation de type OFDM. Il est rappelé qu'un signal OFDM sortant d'un modem 14 varie autour d'une valeur moyenne, entre une valeur minimale et une valeur maximale. Ce signal OFDM provenant du modem 14 doit être converti en signal analogique, puis en signal lumineux par la source lumineuse 18 (en émission). Cette dernière (18) a ses propres caractéristiques. En particulier, elle possède une caractéristique courant/puissance optique qui définit la puissance optique émise en fonction du courant fourni, et une bande passante de modulation limitée (généralement définie à -3dB ou à -6dB). Afin de transmettre un signal OFDM, on fait généralement correspondre sa valeur minimale à un courant minimal i_min et sa valeur maximale à un courant maximal in_max. Afin de maximiser la qualité du signal transmis et donc celle du signal reçu, on cherche à maximiser l'écart i_max-i_min. Ainsi, les valeurs intermédiaires du signal OFDM correspondent à des courants dont les variations sont plus importantes que si l'écart i_max-i_min était faible. On a donc intérêt à fixer le courant minimal i_min aussi proche que possible de 0, et le courant maximal i_max aussi proche que possible du courant maximal accepté par la source lumineuse 18.

Dans la pratique, la source lumineuse 18 peut avoir une réponse courant-puissance optique émise non linéaire. Autrement dit, une évolution linéaire du courant de pilotage peut mener à une évolution non linéaire de la puissance optique émise. On fixe donc i_min et i_max aux valeurs limites de la plage de linéarité de la source lumineuse 18. Cette plage peut toutefois correspondre à plusieurs centaines de mA. Le signal OFDM transformé en signal électronique par le module de conversion numérique/analogique 15-1 n'atteignant que quelques mA, le module de pilotage 10 va amplifier ce signal électronique à des niveaux de courant relativement élevés tout en préservant sa linéarité, grâce à l'invention (comme on le verra plus loin).

Par ailleurs, la source lumineuse 18 possédant une bande passante de modulation spécifique, plus cette bande passante de modulation sera élevée, plus la largeur du canal de communication OFDM pourra être augmentée, et donc plus le débit pourra être élevé, grâce à une technique de pré-égalisation (comme on le verra plus loin).

Le module optoélectronique de réception 13 est propre à convertir un signal lumineux reçu en un signal numérique destiné au modem 14, éventuellement via le module de conversion analogique/numérique 15-2 lorsqu'il doit préalablement être converti en signal non binaire (ou analogique).

Ce module optoélectronique de réception 13 comprend au moins un photorécepteur 20 qui peut, par exemple, comporter au moins une photodiode ou au moins une photodiode à avalanche ou au moins une diode à avalanche à photon unique (ou « Single-Photon Avalanche Diode (ou SPAD)) ».

Du côté réception, après propagation en espace libre, un signal lumineux OFDM est capté par au moins un photorécepteur 20 qui le convertit en courant (appelé photocourant). Plus la distance de communication en espace libre augmente, plus la puissance optique reçue (et donc le photocourant) est faible. Typiquement ce photocourant est de l'ordre de quelques µA à quelques dizaines de µA. Par conséquent, le module de pilotage 10 va transformer ce photocourant en une tension suffisamment élevée pour être traitée par le modem 14 après la transformation en signal numérique effectuée par le module de conversion analogique/numérique 15-2 (comme on le verra plus loin). Cette amplification doit cependant être réalisée sans ajout de distorsions sur le signal reçu afin d'éviter de dégrader sa qualité.

Par ailleurs, la chaîne de réception possède une bande passante spécifique qui est de préférence au moins égale à la bande passante de la chaîne d'émission afin d'assurer une réception sans distorsions en fréquence. Or, les photorécepteurs 20 classiquement utilisés possèdent une fréquence de coupure propre et une capacité interne qui, lorsqu'elle augmente, diminue la bande passante totale de la chaîne de réception. Cette capacité interne est proportionnelle à la surface sensible du photorécepteur 20, qui doit être aussi grande que possible (dans la limite des contraintes mécaniques de conception) afin d'optimiser la quantité de lumière collectée. Le module de pilotage 10 va donc assurer à la fois une bonne sensibilité et un gain important de la chaîne de réception, tout en maintenant sa bande passante à une valeur au moins égale à celle de la chaîne d'émission et en limitant autant que possible les distorsions et l'introduction de bruits parasites (comme on le verra plus loin).

Le module de pilotage 10 est agencé de manière à piloter le module optoélectronique d'émission 12 et le module optoélectronique de réception 13.

Le module d'alimentation 11 est agencé de manière à alimenter en courant choisi par le module de pilotage 10 le module optoélectronique d'émission 12, et en tensions choisies par le module de pilotage 10 le module optoélectronique de réception 13 et le module de pilotage 10 (ainsi que les éventuels modem 14, module de conversion numérique/analogique 15-1 et module de conversion analogique/numérique 15-2).

On dispose donc désormais d'un dispositif optoélectronique 1 comprenant un unique module d'alimentation 11 commun aux autres modules (10 et 12 à 15-1 et 15-2) et un unique module de pilotage 10 commun aux module optoélectronique d'émission 12 et module optoélectronique de réception 13. Un tel dispositif optoélectronique 1 est donc conçu spécifiquement pour fonctionner dans une application OWC, ce qui permet d'optimiser ses performances, de réduire notablement sa consommation d'énergie, et de réduire notablement son encombrement et son coût.

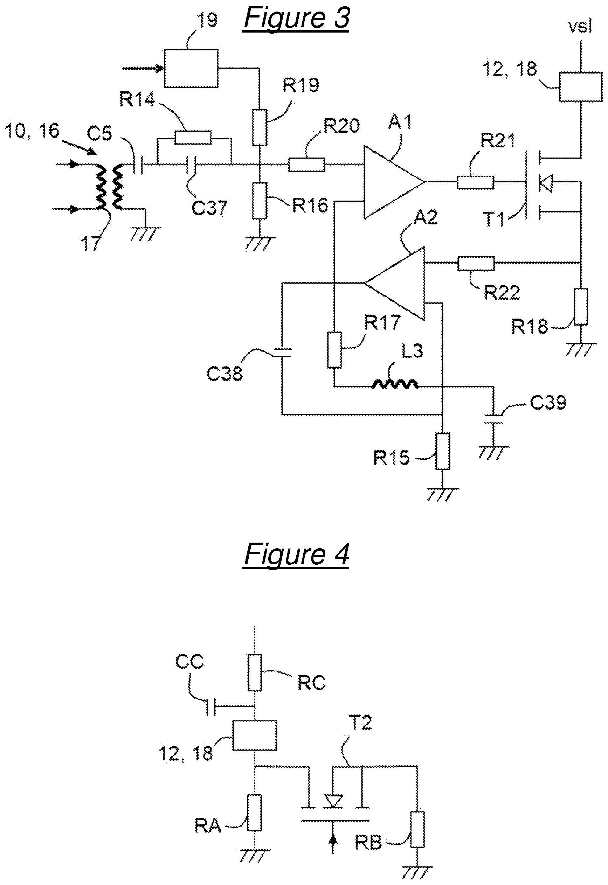

Par exemple, et comme illustré sur la figure 3, le module de pilotage 10 comprend une première sous-partie 16 dédiée à l'émission (ou transmission) et comprenant un transformateur 17, un premier groupe de composants passifs (C5, R14 et C37), un premier amplificateur A1 et un transistor T1.

Le transformateur 17 assure une conversion du signal analogique reçu sous une forme différentielle (ici en provenance du module de conversion numérique/analogique 15-1 (car modulé OFDM)) en un premier signal intermédiaire unique (c'est-à-dire non différentiel).

Le premier groupe de composants passifs (C5, R14 et C37) est chargé d'effectuer une pré-égalisation du premier signal intermédiaire pour délivrer un deuxième signal intermédiaire (ou premier signal intermédiaire pré-égalisé). Cette pré-égalisation est destinée à améliorer les performances de bande passante de la source lumineuse 18 du module optoélectronique d'émission 12. Par exemple, et comme illustré non limitativement sur la figure 3, le premier groupe de composants passifs peut comprendre un premier composant capacitif C5 (par exemple un condensateur), un composant résistif R14 (par exemple une résistance) et un second composant capacitif C37 (par exemple un condensateur).

Le premier amplificateur A1 est chargé d'amplifier le deuxième signal intermédiaire qu'il reçoit sur une première entrée pour délivrer sur une sortie un troisième signal intermédiaire (ou deuxième signal intermédiaire amplifié). Il peut s'agir, par exemple, d'un amplificateur à courant de rétroaction (ou « current feedback amplifier »). La première entrée du premier amplificateur A1 est de préférence son entrée non inverseuse (ou +). Le premier amplificateur A1 comprend aussi une seconde entrée qui est de préférence son entrée inverseuse (ou -).

Le transistor T1 comporte une grille qui reçoit le troisième signal intermédiaire et un drain qui est connecté au module optoélectronique d'émission 12. Le troisième signal intermédiaire pilote donc la grille du transistor T1, de préférence via un composant résistif R21 (par exemple une résistance). Dans ce cas, le module optoélectronique d'émission 12 est polarisé par une tension vsl qui est fournie par le module d'alimentation 11 et qui définit un niveau moyen de courant de polarisation, et est traversé par un courant qui a des fluctuations entre des valeurs minimale i_min et maximale i_max induites par des fluctuations du troisième signal intermédiaire. Le troisième signal intermédiaire envoyé sur la grille du transistor T1 est donc un signal fluctuant, dont l'amplitude doit être la plus grande possible (dans les limites des capacités de la source lumineuse 18), et qui va se répercuter au niveau du courant qui traverse la source lumineuse 18 pour la faire fluctuer entre i_min et i_max.

Ce transistor T1 peut, par exemple, être un MOSFET (« Metal Oxide Semiconductor Field Effect Transistor - transistor à effet de champ à structure métal-oxyde-semiconducteur ou plus simplement transistor à effet de champ à grille isolée).

Afin d'assurer une meilleure linéarité du signal lumineux transmis par la source lumineuse 18, le module de pilotage 10 (et plus précisément sa première sous-partie 16) peut, comme illustré non limitativement sur la figure 3, comprendre une boucle de rétroaction (ou « feedback loop ») comportant un second amplificateur A2. Ce second amplificateur A2 a une première entrée qui est couplée à une source du transistor T1, une seconde entrée, et une sortie qui est couplée à cette seconde entrée via un second groupe de composants passifs (C38, R17, L3, R15, C39) et à la seconde entrée du premier amplificateur A1. Cela permet au courant qui traverse le module optoélectronique d'émission 12 d'avoir une forme qui est similaire à la forme du deuxième signal intermédiaire.

La première entrée du second amplificateur A2 est de préférence son entrée non inverseuse (ou +). Elle est de préférence couplée à la source du transistor T1 via deux composants résistifs R18 et R22 (par exemple deux résistances). La seconde entrée du second amplificateur A2 est de préférence son entrée inverseuse (ou -).

Ce second amplificateur A2 peut, par exemple, être un amplificateur à courant de rétroaction (ou current feedback amplifier), comme le premier amplificateur A1.

Par exemple, et comme illustré non limitativement sur la figure 3, le second groupe de composants passifs (C38, R17, L3, R15, C39) peut comprendre un composant inductif L3 (par exemple une inductance (ou bobine)) introduisant une augmentation de bande passante (ou « peaking ») à un signal image du courant traversant le module optoélectronique d'émission 12.

Egalement par exemple, et comme illustré non limitativement sur la figure 3, le second groupe de composants passifs (C38, R17, L3, R15, C39) peut comprendre un composant capacitif C39 (par exemple un condensateur) induisant une autre pré-égalisation. Cette dernière sert à atténuer les hautes fréquences au niveau de la rétroaction du premier amplificateur A1, et par conséquent à induire une suramplification des hautes fréquences au nveau de la grille du transistor T1.

On notera, comme illustré non limitativement sur la figure 3, que le second groupe de composants passifs (C38, R17, L3, R15, C39) peut aussi comprendre un composant capacitif C38 (par exemple un condensateur) et deux composants résistifs R17 et R15 (par exemple des résistances) servant à augmenter la bande passante (peaking).

On notera également que le module de pilotage 10 (et plus précisément sa première sous-partie 16) peut, comme illustré non limitativement sur la figure 3, comprendre un régulateur de tension à faible chute (ou « Low-dropout regulator ») 19 produisant, à partir d'un signal de pilotage, une tension polarisant la première entrée du premier amplificateur A1. Ce signal de pilotage a des états définissant les instants pendant lesquels le module optoélectronique d'émission 12 doit fonctionner (pour transmettre des données au sein de signaux lumineux) ou ne pas fonctionner (pour ne rien transmettre). Par exemple, ce signal de pilotage est issu du modem 14.

Grâce à l'agencement illustré sur la figure 3, le premier amplificateur A1, qui a pour objectif d'assurer que la différence entre ses première et seconde entrées différentielles soit la plus petite possible, agit de sorte que le courant traversant la source lumineuse 18 ait une forme aussi proche que possible de la forme du deuxième signal intermédiaire, afin d'assurer une meilleure linéarité du signal lumineux transmis par la source lumineuse 18.

Au lieu d'utiliser un régulateur de tension à faible chute 19, on peut, par exemple et comme illustré non limitativement sur la figure 4, utiliser un transistor T2 ayant une source recevant le signal de pilotage précité (par exemple issu du modem 14), et agissant comme un interrupteur ouvert ou fermé (sur la source lumineuse 18) selon l'état qui est défini par ce signal de pilotage reçu. Ce transistor T2 peut, par exemple, être un MOSFET. Dans cet exemple, on utilise un T d'injection (ou « bias tee »), comprenant un composant résistif RC et un composant capacitif CC, pour injecter le courant. La résistance RA a une très grande valeur (typiquement de l'ordre de quelques dizaines de kohm), et la résistance RB a une faible valeur (typiquement proche de 1 ohm). Si le transistor T2 est ouvert, un très faible courant (proche de 0) passe par la source lumineuse 18 du fait de la résistance RA. En revanche si le transistor T2 est fermé, un courant de fonctionnement élevé passe par la source lumineuse 18 du fait de la résistance RB. Par conséquent, dans le premier cas (T2 ouvert) la source lumineuse 18 est désactivée et dans le deuxième cas (T2 fermé) la source lumineuse 18 est activée.

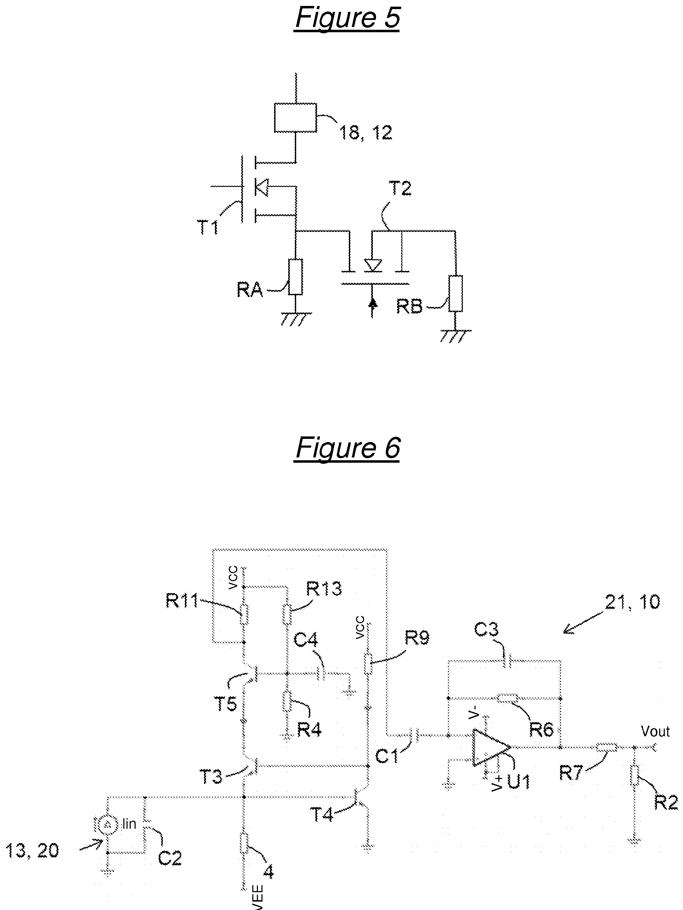

Dans une autre variante de réalisation illustrée non limitativement sur la figure 5, la résistance RA a une très grande valeur (typiquement de l'ordre de quelques dizaines de kohm), et la résistance RB a une faible valeur (typiquement proche de 1 ohm). Si le transistor T2 est ouvert, un très faible courant (proche de 0) passe par la source lumineuse 18 du fait de la résistance RA. En revanche si le transistor T2 est fermé, un courant de fonctionnement élevé passe par la source lumineuse 18 du fait de la résistance RB. Par conséquent, dans le premier cas (T2 ouvert) la source lumineuse 18 est désactivée et dans le deuxième cas (T2 fermé) la source lumineuse 18 est activée.

On notera, comme illustré non limitativement sur la figure 6, que le module optoélectronique de réception 13 peut comprendre un photorécepteur 20 délivrant un premier courant représentatif du signal lumineux reçu (en provenance d'un équipement d'interface 5-k couplé à un équipement de communication 6-k). Le photorécepteur 20 est ici représenté par une source de courant montée en parallèle avec un composant capacitif C2 (par exemple un condensateur) ayant une valeur de capacité choisie. Dans ce cas, le module de pilotage 10 peut comprendre une seconde sous-partie 21 dédiée à la réception et comprenant un premier amplificateur opérationnel U1 comprenant des première et seconde entrées et une sortie. La première entrée du premier amplificateur opérationnel U1 est de préférence son entrée inverseuse (ou -). La seconde entrée du premier amplificateur opérationnel U1 est de préférence son entrée non inverseuse (ou +).

Ce premier amplificateur opérationnel U1 est configuré en amplificateur trans-impédance (ou TIA (« Trans-Impedance Amplifier »)) pour convertir le premier courant, reçu sur sa première entrée via un troisième groupe de composants actifs et passifs, en une tension délivrée sur une sortie grâce à une boucle de contre-réaction (R6, C3) couplant sa sortie à sa première entrée. Le troisième groupe de composants actifs et passifs est ici chargé de réduire la valeur de capacité du composant capacitif C2 qui est ressentie par la première entrée du premier amplificateur opérationnel U1.

Par exemple, la boucle de contre-réaction (R6, C3) peut comprendre un composant résistif de contre-réaction R6 (par exemple une résistance) permettant la conversion du courant injecté sur la première entrée en tension et monté en parallèle avec un composant capacitif de contre-réaction C3 (par exemple un condensateur) qui garantit la stabilité du premier amplificateur opérationnel U1.

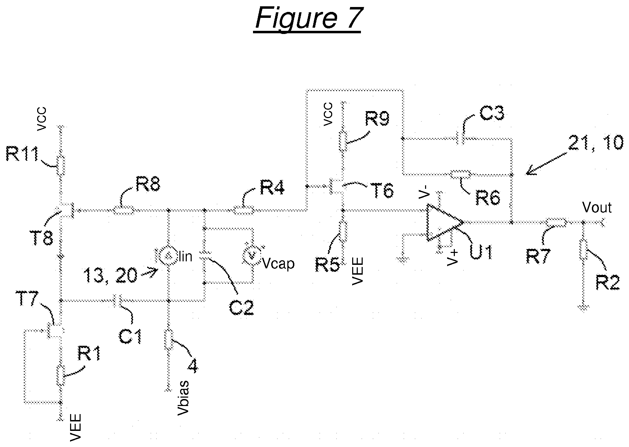

Dans une variante de réalisation illustrée non limitativement sur la figure 7, le module optoélectronique de réception 13 comprend toujours un photorécepteur 20 délivrant un premier courant représentatif du signal lumineux reçu (en provenance d'un équipement d'interface 5-k couplé à un équipement de communication 6-k). Le photorécepteur 20 est ici aussi représenté par une source de courant montée en parallèle avec un composant capacitif C2 (par exemple un condensateur) ayant une valeur de capacité choisie, et le module de pilotage 10 comprend une seconde sous-partie 21 dédiée à la réception et comprenant aussi un premier amplificateur opérationnel U1 comprenant des première et seconde entrées et une sortie. La première entrée du premier amplificateur opérationnel U1 est de préférence son entrée inverseuse (ou -). La seconde entrée du premier amplificateur opérationnel U1 est de préférence son entrée non inverseuse (ou +).

Le premier amplificateur opérationnel U1 est configuré en amplificateur trans-impédance (ou TIA) pour convertir le premier courant, reçu sur sa première entrée via un transistor T6 ayant une grille et appartenant à un quatrième groupe de composants actifs et passifs (T6, R5, R9), en une tension délivrée sur sa sortie grâce à une boucle de contre-réaction (R6, C3) reliant cette sortie à la grille du transistor T6. Le quatrième groupe de composants actifs et passifs (T6, R5, R9) est ici chargé de réduire la valeur de capacité du composant capacitif C2 qui est ressentie par la première entrée du premier amplificateur opérationnel U1 via le transistor T6. Cet agencement permet d'améliorer la bande passante en réception. Comme illustré, le quatrième groupe de composants actifs et passifs (T6, R5, R9) peut comprendre deux composants résistifs R5 et R9 (par exemple deux résistances), en complément du transistor T6. Cette configuration est appelée en anglais « bootstrap ». Le but de l'ensemble des transistors T6, T7 et T8 est de réduire la capacitance vue par le premier amplificateur opérationnel U1. Cette réduction est obtenue en réduisant (pratiquement à 0) la composante AC entre l'anode et la cathode de la photodiode. Pour ce faire, le transistor T8 injecte sur la cathode une image du courant qui est généré par la photodiode au niveau de l'anode.

Comme illustré non limitativement sur la figure 1, le module optoélectronique d'émission 12 peut comprendre au moins un élément optique 22 assurant une mise en forme choisie du signal lumineux avant transmission. Par exemple, la mise en forme peut être une focalisation ou une défocalisation, selon les besoins.

Egalement comme illustré non limitativement sur la figure 1, le module optoélectronique de réception 13 peut comprendre au moins un élément optique 23 propre à collecter de façon choisie le signal lumineux (transmis par un équipement d'interface 5-k couplé à un équipement de communication 6-k) avant qu'il ne soit converti en courant par le photorécepteur 20. Par exemple, la collection (ou concentration) peut être destinée à augmenter la quantité de signal lumineux reçue et alimentant le photorécepteur 20.

On notera également, comme illustré non limitativement sur la figure 1, que le dispositif optoélectronique 1 peut comprendre un premier filtre optique 24 associé au module optoélectronique d'émission 12 et/ou un second filtre optique 25 associé au module optoélectronique de réception 13. Le premier filtre optique 24 est chargé de laisser passer des signaux lumineux qui sont délivrés par le module optoélectronique d'émission 12 et qui ont une longueur d'onde (centrale) choisie. Cela peut notamment permettre de limiter la bande passante optique de la source lumineuse 18 si celle-ci à un spectre optique trop large. Le second filtre optique 25 est chargé de laisser passer vers le module optoélectronique de réception 13 des signaux lumineux qui ont une longueur d'onde (centrale) choisie. En d'autres termes, le dispositif optoélectronique 1 peut assurer une filtration de longueur(s) d'onde en émission, par exemple afin de ne transmettre que des données numériques ayant été préalablement associées à une longueur d'onde prédéfinie, et/ou peut assurer une filtration de longueur(s) d'onde en réception afin de ne traiter en interne (à destination du routeur 7) que des données numériques ayant été préalablement associées à une longueur d'onde prédéfinie.

Cette option permet avantageusement de faire du multiplexage en longueurs d'onde au sein du réseau 3, et ainsi de permettre à N équipements de communication 6-k associés à N longueurs d'onde différentes de communiquer en parallèle soit via un même système de communication optique sans fil (ou OWC) 2 comprenant N points d'accès AP1 à APN (associés respectivement aux N longueurs d'onde différentes) et son propre routeur 7, comme illustré sur la figure 1, soit via N points d'accès AP1 à APN associés respectivement aux N longueurs d'onde différentes et couplés à au moins un routeur du réseau 3, soit encore via un point d'accès comprenant N dispositifs optoélectroniques 1 associés respectivement aux N longueurs d'onde différentes et couplé à au moins un routeur 7. Par exemple, le multiplexage en longueurs d'onde peut être de type WDM (« Wavelength Division Multiplexing »), et donc peut servir à diviser un flux de données en sous flux qui sont chacun transmis à une longueur d'onde donnée puis réassemblés après réception afin de reconstruire le flux initial, ou bien à transmettre des flux différents sur différentes longueurs d'onde. Dans tous les cas, la mise en parallèle de flux de données associés à des longueurs d'onde différentes permet d'augmenter le débit. Ainsi, on peut atteindre des débits qui peuvent être au moins de l'ordre de 1 Gbps au niveau de chaque dispositif optoélectronique 1 et donc pour chaque longueur d'onde. On comprendra qu'en faisant varier le nombre N de dispositifs optoélectroniques 1 on peut faire varier le débit total du système de communication optique sans fil (ou OWC) 2. On dispose ainsi d'une grande modularité.

On notera que dans l'exemple illustré non limitativement sur la figure 1 le premier filtre optique 24 est placé en amont de l'élément optique 22 (par rapport au sens de transmission des données). Mais dans une variante (non illustrée) le premier filtre optique 24 pourrait être placé en aval de l'élément optique 22 (par rapport au sens de transmission des données).

On notera également que dans l'exemple illustré non limitativement sur la figure 1 le second filtre optique 25 est placé en aval de l'élément optique 23 (par rapport au sens de transmission des données). Mais dans une variante (non illustrée) le second filtre optique 25 pourrait être placé en amont de l'élément optique 23 (par rapport au sens de transmission des données).

On notera également que le premier filtre optique 24 peut faire partie (ou ne pas faire partie) du module optoélectronique d'émission 12. De même, le second filtre optique 25 peut faire partie (ou ne pas faire partie) du module optoélectronique de réception 13.

On notera également que l'élément optique 22 peut faire partie (ou ne pas faire partie) du module optoélectronique d'émission 12. De même, l'élément optique 23 peut faire partie (ou ne pas faire partie) du module optoélectronique de réception 13.

On notera également que la seconde sous-partie 21 du module de pilotage 10 peut être agencée de manière à avoir un gain variable en fonction de la qualité du canal de communication optique estimée par le modem 14. Dans ce cas, le modem 14 génère une commande représentative de cette qualité et transmise à la seconde sous-partie 21 via une interface de sorte qu'elle adapte la valeur du gain de l'amplification en réception.

On notera par ailleurs que l'invention n'est pas limitée aux modes de réalisation décrits précédemment, mais définie par les revendications jointes. Il apparaîtra en effet à l'homme de l'art que diverses modifications peuvent être apportées aux modes de réalisation décrits ci-dessus, à la lumière de l'enseignement qui vient de lui être divulgué. Dans la présentation détaillée de l'invention qui est faite précédemment, les termes utilisés ne doivent pas être interprétés comme limitant l'invention aux modes de réalisation exposés dans la présente description, mais doivent être interprétés pour y inclure tous les équivalents dont la prévision est à la portée de l'homme de l'art en appliquant ses connaissances générales à la mise en œuvre de l'enseignement qui vient de lui être divulgué.

## Revendications

1. Dispositif optoélectronique (1) pour un point d'accès (APn) ou un point terminal d'un système de communication optique sans fil (2) comportant :
- un module optoélectronique d'émission (12) propre à convertir un signal numérique en un signal lumineux à transmettre,
- un module optoélectronique de réception (13) propre à convertir un signal lumineux reçu en un signal numérique,
- un module de pilotage (10) pilotant lesdits module optoélectronique d'émission (12) et module optoélectronique de réception (13), et
- un module d'alimentation (11) alimentant en courant choisi par ledit module de pilotage (10) ledit module optoélectronique d'émission (12), et en tensions choisies par ledit module de pilotage (10) lesdits module optoélectronique de réception (13) et module de pilotage (10),
**caractérisé en ce que** ledit module de pilotage (10) comprend i) un transformateur (17) assurant une conversion d'un signal analogique reçu sous une forme différentielle en un premier signal intermédiaire unique, ii) un premier groupe de composants passifs (C5, R14, C37) effectuant une pré-égalisation dudit premier signal intermédiaire pour délivrer un deuxième signal intermédiaire, iii) un premier amplificateur (A1) amplifiant ledit deuxième signal intermédiaire reçu sur une première entrée pour délivrer un troisième signal intermédiaire sur une sortie, et iv) un transistor (T1) comportant une grille recevant ledit troisième signal intermédiaire et un drain connecté audit module optoélectronique d'émission (12), ce dernier (12) étant polarisé par une tension fournie par ledit module d'alimentation (11) et définissant un niveau moyen de courant de polarisation et étant traversé par un courant ayant des fluctuations entre des valeurs minimale et maximale induites par des fluctuations dudit troisième signal intermédiaire.

2. Dispositif selon la revendication 1, **caractérisé en ce que** ledit module de pilotage (10) comprend une boucle de rétroaction comportant un second amplificateur (A2) ayant une première entrée couplée à une source dudit transistor (T1), une seconde entrée, et une sortie couplée à ladite seconde entrée via un second groupe de composants passifs et à une seconde entrée dudit premier amplificateur (A1), de sorte que ledit courant traversant ledit module optoélectronique d'émission (12) ait une forme similaire à une forme dudit deuxième signal intermédiaire.

3. Dispositif selon la revendication 2, **caractérisé en ce que** ledit second groupe de composants passifs comprend un composant inductif (L3) introduisant une augmentation de bande passante à un signal image dudit courant traversant ledit module optoélectronique d'émission (12) et/ou un composant capacitif (C39) induisant une autre pré-égalisation.

4. Dispositif selon l'une des revendications 1 à 3, **caractérisé en ce que** ledit module de pilotage (10) comprend un régulateur de tension à faible chute (19) produisant à partir d'un signal de pilotage, ayant des états définissant des instants pendant lesquels ledit module optoélectronique d'émission (12) doit fonctionner ou ne pas fonctionner, une tension polarisant ladite première entrée dudit premier amplificateur (A1).

5. Dispositif selon l'une des revendications 1 à 3, **caractérisé en ce que** ledit module de pilotage (10) comprend un transistor (T2) ayant une source recevant un signal de pilotage, ayant des états définissant des instants pendant lesquels ledit module optoélectronique d'émission (12) doit fonctionner ou ne pas fonctionner, et agissant comme un interrupteur ouvert ou fermé selon ledit état défini par ledit signal de pilotage reçu.

6. Dispositif selon l'une des revendications 1 à 5, **caractérisé en ce que** ledit module optoélectronique de réception (13) comprend un photorécepteur (20) délivrant un premier courant représentatif dudit signal lumineux reçu, et **en ce que** ledit module de pilotage (10) comprend un premier amplificateur opérationnel (U1) configuré en amplificateur trans-impédance pour convertir ledit premier courant, reçu sur une première entrée via un troisième groupe de composants actifs et passifs chargé de réduire une valeur de capacité ressentie par sa première entrée, en une tension délivrée sur une sortie grâce à une boucle de contre-réaction (R6, C3) couplant ladite première entrée à ladite sortie.

7. Dispositif selon l'une des revendications 1 à 5, **caractérisé en ce que** ledit module optoélectronique de réception (13) comprend un photorécepteur (20) délivrant un premier courant représentatif dudit signal lumineux reçu, et **en ce que** ledit module de pilotage (10) comprend un premier amplificateur opérationnel (U1) configuré en amplificateur trans-impédance pour convertir ledit premier courant, reçu sur une première entrée via un transistor (T6) ayant une grille et appartenant à un quatrième groupe de composants actifs et passifs chargé de réduire une valeur de capacité dudit photorécepteur (20) ressentie par sa première entrée, en une tension délivrée sur une sortie grâce à une boucle de contre-réaction couplant cette sortie à ladite grille du transistor (T6).

8. Dispositif selon l'une des revendications 1 à 7, **caractérisé en ce qu'**il comprend un module de conversion numérique/analogique (15-1) propre à convertir un signal numérique reçu en un signal analogique non binaire destiné audit module optoélectronique d'émission (12), et un module de conversion analogique/numérique (15-2) propre à convertir un signal analogique non binaire fourni par ledit module optoélectronique de réception (13) en un signal numérique, et **en ce que** ledit module d'alimentation (11) alimente en courant ledit module de conversion numérique/analogique (15-1) et ledit module de conversion analogique/numérique (15-2).

9. Dispositif selon l'une des revendications 1 à 8, **caractérisé en ce que** ledit module optoélectronique d'émission (12) comprend au moins un élément optique (22) assurant une mise en forme choisie dudit signal lumineux avant transmission et/ou ledit module optoélectronique de réception (13) comprend au moins un élément optique (23) propre à collecter de façon choisie ledit signal lumineux avant qu'il ne soit converti en courant.

10. Dispositif selon l'une des revendications 1 à 9, **caractérisé en ce qu'**il comprend i) un premier filtre optique (24) associé audit module optoélectronique d'émission (12) et chargé de laisser passer des signaux lumineux délivrés par ce dernier (12) et ayant une longueur d'onde choisie, et/ou ii) un second filtre optique (25) associé audit module optoélectronique de réception (13) et chargé de laisser passer vers ce dernier (13) des signaux lumineux ayant une longueur d'onde choisie.

11. Dispositif selon l'une des revendications 1 à 10, **caractérisé en ce qu'**il comprend un modem (14) propre à convertir chaque signal de données analogiques modulées reçu en signal de données numériques, et à convertir chaque signal de données analogiques modulées en données numériques.

12. Point d'accès ou terminal (APn) pour un système de communication optique sans fil (2), **caractérisé en ce qu'**il comprend au moins un dispositif optoélectronique (1) selon l'une des revendications précédentes.

13. Système de communication optique sans fil (2) pour un réseau optique non filaire (3), **caractérisé en ce qu'**il comprend au moins un point d'accès ou terminal (APn) selon la revendication 12.

14. Système selon la revendication 13, **caractérisé en ce qu'**il comprend i) N points d'accès ou terminaux (APn) associés respectivement à N longueurs d'onde différentes, avec N ≥ 2, et ii) un routeur (7) couplé auxdits N points d'accès ou terminaux (APn).

## Patentansprüche

1. Optoelektronische Vorrichtung (1) für einen Zugangspunkt (APn) oder einen Endpunkt eines drahtlosen optischen Kommunikationssystems (2), die Folgendes aufweist:
- ein optoelektronisches Sendemodul (12), das ein digitales Signal in ein zu übertragendes Lichtsignal umwandeln kann,
- ein optoelektronisches Empfangsmodul (13), das ein empfangenes Lichtsignal in ein digitales Signal umwandeln kann,
- ein Steuermodul (10), das das optoelektronische Sendemodul (12) und das optoelektronische Empfangsmodul (13) steuert, und
- ein Versorgungsmodul (11), das das optoelektronische Sendemodul (12) mit dem von dem Steuermodul (10) gewählten Strom und das optoelektronische Empfangsmodul (13) und das Steuermodul (10) mit den von dem Steuermodul (10) gewählten Spannungen versorgt,
**dadurch gekennzeichnet, dass** das Steuermodul (10) i) einen Transformator (17), der eine Umwandlung eines in einer Differentialform empfangenen analogen Signals in ein einziges erstes Zwischensignal gewährleistet, ii) eine erste Gruppe passiver Komponenten (C5, R14, C37), die eine Vorentzerrung des ersten Zwischensignals durchführt, um ein zweites Zwischensignal zu liefern, iii) einen ersten Verstärker (A1), der das zweite Zwischensignal verstärkt, das an einem ersten Eingang empfangen wird, um ein drittes Zwischensignal an einem Ausgang zu liefern, und iv) einen Transistor (T1) umfasst, der ein Gate aufweist, das das dritte Zwischensignal empfängt, und einen Drain, der mit dem optoelektronischen Sendemodul (12) verbunden ist, wobei dieses (12) durch eine von dem Versorgungsmodul (11) bereitgestellte Spannung polarisiert ist und ein mittleres Polarisationsstromniveau definiert und von einem Strom durchflossen wird, der Schwankungen zwischen minimalen und maximalen Werten aufweist, die durch Schwankungen des dritten Zwischensignals induziert werden.

2. Vorrichtung nach Anspruch 1, **dadurch gekennzeichnet, dass** das Steuermodul (10) eine Rückkopplungsschleife umfasst, die einen zweiten Verstärker (A2) aufweist, der einen ersten Eingang, der mit einer Quelle des Transistors (T1) gekoppelt ist, einen zweiten Eingang und einen Ausgang hat, der mit dem zweiten Eingang über eine zweite Gruppe passiver Komponenten und mit einem zweiten Eingang des ersten Verstärkers (A1) gekoppelt ist, so dass der Strom, der das optoelektronische Sendemodul (12) durchläuft, eine Form hat, die einer Form des zweiten Zwischensignals ähnelt.

3. Vorrichtung nach Anspruch 2, **dadurch gekennzeichnet, dass** die zweite Gruppe passiver Komponenten eine induktive Komponente (L3) umfasst, die eine Bandbreitenerhöhung bei einem Bildsignal des durch das optoelektronische Sendemodul (12) fließenden Stroms einleitet, und/oder eine kapazitive Komponente (C39), die eine weitere Vorentzerrung einleitet.

4. Vorrichtung nach einem der Ansprüche 1 bis 3, **dadurch gekennzeichnet, dass** das Steuermodul (10) einen Spannungsregler mit geringem Abfall (19) umfasst, der aus einem Steuersignal, dessen Zustände die Zeitpunkte definieren, zu denen das optoelektronische Sendemodul (12) arbeiten oder nicht arbeiten soll, eine Spannung erzeugt, die den ersten Eingang des ersten Verstärkers (A1) polarisiert.

5. Vorrichtung nach einem der Ansprüche 1 bis 3, **dadurch gekennzeichnet, dass** das Steuermodul (10) einen Transistor (T2) umfasst, der eine Quelle hat, die ein Steuersignal empfängt, Zustände hat, die Zeitpunkte definieren, zu denen das optoelektronische Sendemodul (12) arbeiten oder nicht arbeiten soll, und der als offener oder geschlossener Schalter entsprechend dem durch das empfangene Steuersignal definierten Zustand wirkt.

6. Vorrichtung nach einem der Ansprüche 1 bis 5, **dadurch gekennzeichnet, dass** das optoelektronische Empfangsmodul (13) einen Fotoempfänger (20) umfasst, der einen ersten Strom liefert, der für das empfangene Lichtsignal repräsentativ ist, und dass das Steuermodul (10) einen ersten Betriebsverstärker (U1) umfasst, der als Transimpedanzverstärker eingerichtet ist, um den ersten Strom, der an einem ersten Eingang über eine dritte Gruppe von aktiven und passiven Komponenten empfangen wird, die einen an seinem ersten Eingang wahrgenommenen Kapazitätswert reduzieren sollen, in eine Spannung umzuwandeln, die an einem Ausgang durch eine Rückkopplungsschleife (R6, C3) abgegeben wird, die den ersten Eingang mit dem Ausgang koppelt.

7. Vorrichtung nach einem der Ansprüche 1 bis 5, **dadurch gekennzeichnet, dass** das optoelektronische Empfangsmodul (13) einen Fotoempfänger (20) umfasst, der einen ersten Strom liefert, der für das empfangene Lichtsignal repräsentativ ist, und dass das Steuermodul (10) einen ersten Betriebsverstärker (U1) umfasst, der als Transimpedanzverstärker eingerichtet ist, um den ersten Strom, der an einem ersten Eingang über einen Transistor (T6) empfangen wird, der ein Gate hat und zu einer vierten Gruppe von aktiven und passiven Komponenten gehört, die einen an seinem Eingang wahrgenommenen Kapazitätswert des Fotorezeptors (20) reduzieren sollen, in eine Spannung umzuwandeln, die an einem Ausgang durch eine Rückkopplungsschleife abgegeben wird, die diesen Ausgang mit dem Gate des Transistors (T6) koppelt.

8. Vorrichtung nach einem der Ansprüche 1 bis 7, **dadurch gekennzeichnet, dass** sie ein Digital-Analog-Umwandlungsmodul (15-1), das dazu geeignet ist, ein empfangenes digitales Signal in ein nicht binäres analoges Signal für das optoelektronische Sendemodul (12) umzuwandeln, und ein Analog-Digital-Umwandlungsmodul (15-2) umfasst, das ein von dem optoelektronischen Empfangsmodul (13) geliefertes nicht binäres Analogsignal in ein Digitalsignal umwandeln kann, und dass das Versorgungsmodul (11) das Digital-Analog-Umwandlungsmodul (15-1) und das Analog-Digital-Umwandlungsmodul (15-2) mit Strom versorgt.

9. Vorrichtung nach einem der Ansprüche 1 bis 8, **dadurch gekennzeichnet, dass** das optoelektronische Sendemodul (12) mindestens ein optisches Element (22) umfasst, das eine ausgewählte Formgebung des Lichtsignals vor der Übertragung gewährleistet, und/oder das optoelektronische Empfangsmodul (13) mindestens ein optisches Element (23) umfasst, das geeignet ist, das Lichtsignal auf ausgewählte Weise zu sammeln, bevor es in Strom umgewandelt wird.

10. Vorrichtung nach einem der Ansprüche 1 bis 9, **dadurch gekennzeichnet, dass** sie i) einen ersten optischen Filter (24), der mit dem optoelektronischen Sendemodul (12) verbunden ist und dafür verantwortlich ist, von diesem (12) ausgegebene Lichtsignale mit einer gewählten Wellenlänge durchzulassen, und/oder ii) einen zweiten optischen Filter (25) umfasst, der mit dem optoelektronischen Empfangsmodul (13) verbunden ist und dafür verantwortlich ist, Lichtsignale mit einer gewählten Wellenlänge zu diesem (13) durchzulassen.

11. Vorrichtung nach einem der Ansprüche 1 bis 10, **dadurch gekennzeichnet, dass** sie ein Modem (14) umfasst, das jedes empfangene modulierte analoge Datensignal in ein digitales Datensignal umwandeln und jedes modulierte analoge Datensignal in digitale Daten umwandeln kann.

12. Zugangspunkt oder Endgerät (APn) für ein drahtloses optisches Kommunikationssystem (2), **dadurch gekennzeichnet, dass** es mindestens eine optoelektronische Vorrichtung (1) nach einem der vorhergehenden Ansprüche umfasst.

13. Drahtloses optisches Kommunikationssystem (2) für ein drahtloses optisches Netzwerk (3), **dadurch gekennzeichnet, dass** es mindestens einen Zugangspunkt oder Endpunkt (APn) nach Anspruch 12 umfasst.

14. System nach Anspruch 13, **dadurch gekennzeichnet, dass** es i) N Zugangspunkte oder Endgeräte (APn) umfasst, die jeweils mit N verschiedenen Wellenlängen verbunden sind, mit N ≥ 2, und ii) einen Router (7), der mit den N Zugangspunkten oder Endgeräten (APn) gekoppelt ist.

## Claims

1. An optoelectronic device (1) for an access point (APn) or an end point of an optical wireless communication system (2) comprising:
- a transmitting optoelectronic module (12) capable of converting a digital signal into a light signal to be transmitted,
- a receiving optoelectronic module (13) capable of converting a received light signal into a digital signal,
- a control module (10) controlling said transmitting optoelectronic module (12) and receiving optoelectronic module (13), and
- a power supply module (11) supplying said transmitting optoelectronic module (12) with current selected by said control module (10), and said receiving optoelectronic module (13) and said control module (10) with voltages selected by said control module (10),
**characterized in that** said control module (10) comprises i) a transformer (17) ensuring a conversion of an analog signal received in a differential form into a single first intermediate signal, ii) a first group of passive components (C5, R14, C37) carrying out a pre-equalization of said first intermediate signal in order to deliver a second intermediate signal, iii) a first amplifier (A1) amplifying said second intermediate signal received on a first input in order to deliver a third intermediate signal on an output, and iv) a transistor (T1) comprising a gate receiving said third intermediate signal and a drain connected to said transmitting optoelectronic module (12), the latter (12) being biased by a voltage supplied by said power supply module (11) and defining a mean bias current level and having a current flowing through it with fluctuations between minimum and maximum values induced by fluctuations of said third intermediate signal.

2. The device according to claim 1, **characterized in that** said control module (10) comprises a feedback loop comprising a second amplifier (A2) having a first input coupled to a source of said transistor (T1), a second input, and an output coupled to said second input via a second group of passive components and to a second input of said first amplifier (A1), so that said current flowing through said transmitting optoelectronic module (12) has a shape similar to a shape of said second intermediate signal.

3. The device according to claim 2, **characterized in that** said second group of passive components comprises an inductive component (L3) introducing an increase in bandwidth to an image signal of said current flowing through said transmitting optoelectronic module (12) and/or a capacitive component (C39) inducing another pre-equalization.

4. The device according to any of claims 1 to 3, **characterized in that** said control module (10) comprises a low-dropout voltage regulator (19) producing from a control signal, having states defining instants during which said transmitting optoelectronic module (12) must operate or not operate, a voltage biasing said first input of said first amplifier (A1).

5. The device according to any of claims 1 to 3, **characterized in that** said control module (10) comprises a transistor (T2) having a source receiving a control signal, having states defining instants during which said transmitting optoelectronic module (12) must operate or not operate, and acting as an open or closed switch according to said state defined by said received control signal.

6. The device according to any of claims 1 to 5, **characterized in that** said receiving optoelectronic module (13) comprises a photoreceiver (20) delivering a first current representative of said received light signal, and **in that** said control module (10) comprises a first operational amplifier (U1) configured as a trans-impedance amplifier to convert said first current, received on a first input via a third group of active and passive components responsible for reducing a capacitance value felt by its first input, into a voltage delivered on an output by means of a feedback loop (R6, C3) coupling said first input to said output.

7. The device according to any of claims 1 to 5, **characterized in that** said receiving optoelectronic module (13) comprises a photoreceiver (20) delivering a first current representative of said received light signal, and **in that** said control module (10) comprises a first operational amplifier (U1) configured as a trans-impedance amplifier to convert said first current, received on a first input via a transistor (T6) having a gate and belonging to a fourth group of active and passive components responsible for reducing a capacitance value of said photoreceiver (20) felt by its first input, into a voltage delivered on an output thanks to a feedback loop coupling this output to said gate of the transistor (T6).

8. The device according to any of claims 1 to 7, **characterized in that** it comprises a digital/analog conversion module (15-1) suitable for converting a received digital signal into a non-binary analog signal intended for said transmitting optoelectronic module (12), and an analog/digital conversion module (15-2) suitable for converting a non-binary analog signal supplied by said receiving optoelectronic module (13) into a digital signal, and **in that** said power supply module (11) supplies power to said digital/analog conversion module (15-1) and said analog/digital conversion module (15-2).

9. The device according to any of claims 1 to 8, **characterized in that** said transmitting optoelectronic module (12) comprises at least one optical element (22) ensuring a selected shaping of said light signal before transmission and/or said receiving optoelectronic module (13) comprises at least one optical element (23) suitable for collecting said light signal in a selected way before it is converted into current.

10. The device according to any of claims 1 to 9, **characterized in that** it comprises i) a first optical filter (24) associated with said transmitting optoelectronic module (12) and responsible for letting through light signals delivered by the latter (12) and having a selected wavelength, and/or ii) a second optical filter (25) associated with said receiving optoelectronic module (13) and responsible for letting through to the latter (13) light signals having a selected wavelength.

11. The device according to any of claims 1 to 10, **characterized in that** it comprises a modem (14) suitable to convert each received modulated analog data signal into a digital data signal, and to convert each modulated analog data signal into digital data.

12. An access or end point (APn) for an optical wireless communication system (2), **characterized in that** it comprises at least one optoelectronic device (1) according to one of the preceding claims.

13. An optical wireless communication system (2) for an optical wireless network (3), **characterized in that** it comprises at least one access or end point (APn) according to claim 12.

14. The system according to claim 13, **characterized in that** it comprises i) N access or end points (APn) associated respectively with N different wavelengths, with N ≥ 2, and ii) a router (7) coupled to said N access or end points (APn).
